# EUROPEAN PATENT APPLICATION

(11) **EP 1 351 049 A2**
(43) Date of publication of application: **08.10.2003**
(21) Application number: 03007171.6
(22) Date of filing: 28.03.2003
(51) Int. Cl.: G01N 21/67

(54) **Analyzer for metal**

(30) Priority: 01.04.2002 CN 02116294; 02.12.2002 CN 02153707
(71) Applicant: Central Iron & Steel Research Institute, Beijing 100081 (CH)
(72) Inventor: Wang, Haizhou, Haidian District, Beijing 100081 (CH); Chen, Jiwen, Haidian District, Beijing 100081 (CH); Yang, Zhijun, Haidian District, Beijing 100081 (CH); Yang, Xinsheng, Haidian District, Beijing 100081 (CH); Gao, Hongbin, Haidian District, Beijing 100081 (CH); Jia, Yunhai, Haidian District, Beijing 100081 (CH); Yuan, Liangjing, Haidian District, Beijing 100081 (CH); Qu, Wenjun, Haidian District, Beijing 100081 (CH); Wang, Zhening, Haidian District, Beijing 100081 (CH)
(74) Representative: Schnekenbühl, Robert Matthias L.

(57) **Abstract**

The present invention relates to the field of chemical analysis of metal material. The original position analyzer for metal is composed of the emission source system, the light dispersion system, the high-speed single discharge signal collection system, the signal analysis system that conducts numeric resolution on the single discharge spectrum, as well as the sample moving/positioning system with continued excitation and synchronized scanning. The present invention conducts synchronal scanning of the sample, performs continuous movement and continuous spark discharge of the sample, adopts light dispersion and high speed signal collection, keeps real time record in a digital form, and conducts statistic analysis of the chemical composition, elementary distribution, porosity and inclusion distribution simultaneously. The results are accurate and complete.

## Description

### Technical field

The present invention relates to the field of material analysis by means of testing physical properties of materials, in particular relates to the determination of chemical compositions and states of metal materials.

### Technical Background

Chemical composition, segregation, surface defection and the content of inclusion are four important indexes in quality control of iron and steel production. In the prior art, it is common to uses sulfur imprint experiment to test the segregation or distribution of elements in steel, acid leaching to test the central porosity and metallographic examination to test the inclusion shape and distribution. The above traditional methods are tedious and slow, and as a result difficult to be used to do quantitative analysis. (Sun Yeyin. *Optical microscopica analysis*. Beijing, Qinghua University Press, 1996, Oct.: p21-40).

In the prior art spark source atomic emission spectrometer is used to determine chemical compositions in materials, but only average content can be obtained, incapable of determining the composition distribution, not to mention the analysis of segregation, porosity, and quantitative distribution of inclusion. The main reason is that the spectrometer has the following three shortages among which the first is static excitation, which means that the sample is fixed during the analysis, only a spot of 5mm diameter is obtained in one excitation and the position of a single discharge can't be recorded, so that the distribution of elements and inclusion couldn't be analyzed. The second shortage of the spectrometer is the integration test mode. That means that the collected object is the voltage integrated according to several thousands of discharge pulses, so that a single discharge character cannot be distinguished, and the chemical information, which hides in a single discharge, could not be resolved. The third shortage is high energy pre-spark. Because most of inclusions are re-melted after 20 to 30 seconds pre-spark, therefore abnormal sparks from which the information of inclusion can be obtained could not be observed.

### Brief Description of the Invention

The purpose of this invention is to provide an analyzer for analyzing statistic distribution of some parameters of a metal material, which, without pre-spark, can directly determine the distribution of chemical composition, composition distribution of elements, segregation, porosity and inclusion in metal materials simultaneously.

According to the above purpose, the technical solution of present invention is that the synchronous scanning platform is used to hold the sample, thus performs spark discharge by exciting the sample with continuous movement; through light dispersion, the high speed data collection system obtains the spectral line intensity and position of each single discharge, and keeps real time record in a digital form; and through statistic resolution, the chemical composition analysis, the element distribution analysis (segregation analysis), the porosity analysis and the inclusion distribution analysis of the sample are conducted.

According to the above-mentioned technical solution, the original position analyzer for metal include the following systems:
Emission source system, which performs spark discharge on the sample, and provides sample evaporation and atomization energy;
Light dispersion system, which transfers the received spark spectrum to form a linear spectrum;
High-speed signal collection system, which performs the high-speed collection of the single discharge;
Signal analysis system, which performs digital resolution for the spark spectrum of single discharge; and
Sample moving / positioning system, which makes the sample to perform continuous, two-dimensional movement relative to the emission source.

The emission source system is composed of high-purity argon controller 1, tungsten electrode 2, sample 3 and spark generator 4. Tungsten electrode is connected to the spark generator 4, and stand opposite to the sample 3 longitudinally. The nozzle 18 of the high-purity argon controller 1 aims at the spark center.
The light dispersion system includes the entrance slits 5, monochrometer 6 and exit slits 7. The entrance slits 5 and exit slits 7 lie in the two sides of the monochrometer 6 respectively. The number of exit slits 7 is n.
The width of said entrance slits 5 is 20-30_m, and the width of the exit slits 7 is 50-80 _m. The monochrometer 6 adopts concave grating and Paschen-Runge device. The number (n) of the exit slits is 3-55.
The signal collection system is composed of n units of circuits that contain the following components:
(a) Photomultiplier tube 8: which transforms the optical signal of the linear spectrum output from the exit slits into electrical current signal;
(b) Amplification board 10: which amplifies the current signal output from the said photomultiplier tube 8;
(c) High speed collection board 11: which transforms the analog signal output from the said amplification board into digital signal, and then the said n units of circuits, after parallel connection, are connected to high voltage board 9; and
(d) High voltage board 9: which provides the photomultiplier tube 8 with 600-1000V negative high voltage, so that the cathode of photomultiplier tube 8 produces weak photoelectron current, which is amplified into strong current output from the anode.

### The signal analysis system includes:

Controlling machine 12, which receives signal output from the high speed collection board 11, and controls the movement of the sample movement / positioning system 15;
Computer 13, which analyzes the sample signal output from the controlling machine, and obtains the chemical composition, segregation, content and distribution of inclusion and porosity in accordance with the predetermine mathematical models; and
Printer 14, which outputs the said analysis results.
The emission source system is input into the entrance slit 5 of the light dispersion system through the reflector 16.
The sample moving/positioning system is composed of framework 21, crotchet 22, connecting tube 23, lifting platform 25, X-axis guide track 29, Y- axis guide track 27, holding bar 32, and stepping motor 29, 31. The lifting platform 25 is fixed on the X- axis guide track 29; the lifting platform 25 is connected with the crotchet 22 through connecting tube 23; the framework 21 is fixed on the crotchet 22; the holding bar 32 fastens the sample 3 through the pressure head 33; the fastening nut 24 is also used to fasten the sample 3; the stepping motor 31 is connected with X- axis guide track 29 through the screw rod 30; the stepping motor 28 is connected to the Y- axis guide track 27 through the screw rod 26. The two form X-Y rectangular coordinate scanning guide track.
The emission source system is connected to the framework 21 of the continuous excitement synchronously scanning positioning system through the sample 3.
The whole light dispersion system is in the state of constant temperature control.
The basic optical parameters of the light dispersion system are: grating focus 750mm, and spectrum line range 120-800nm.

### Description of figures

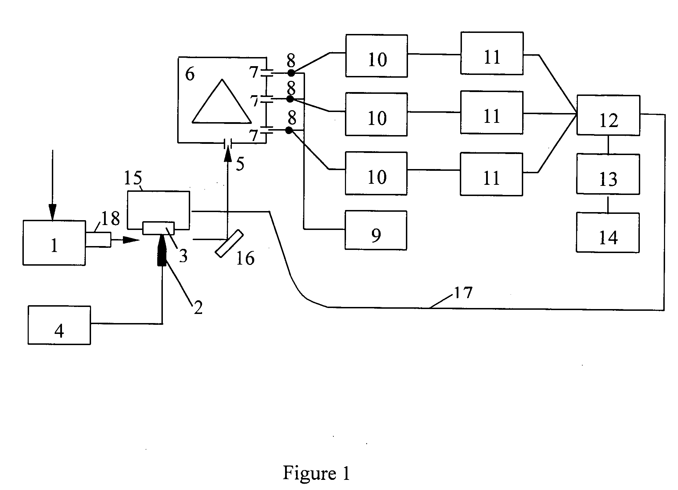

- Fig. 1: is shown the structural diagram of the equipment for original position analysis of metal of present invention.

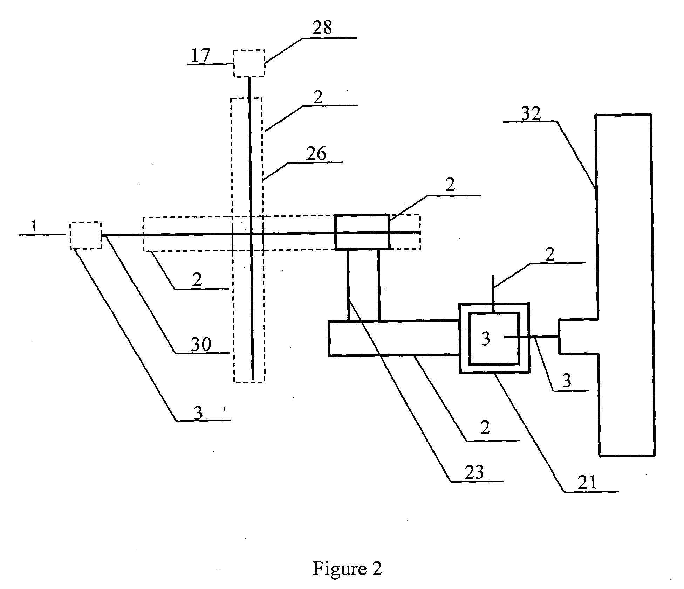

- Fig. 2: is shown the structural diagram of the continuous excitement synchronous scanning positioning system.
It can be referenced from Fig. 1 that the equipment for original position analysis of metal of present invention is composed of the emission source system, the light dispersion system, the high-speed signal collection system, the signal analysis system, and the sample moving/positioning system.
The light excited by the emission source system is input into the entrance slit 5 of the light dispersion system through the reflector 16. The light dispersion system is connected with the PMT (Photomultiplier tube) 8 of the single discharge high speed collection system through the linear spectrum output from the exit slit 7; the high speed collection board 11 of the signal high speed collection system is connected with the controlling machine 12 of the signal analysis system through wire; the controlling machine 12 of the signal analysis system is connected with the stepping motor 28 and 31 of the sample movement / positioning system through wire.

The above-mentioned emission source system is composed of high-purity argon controller 1, tungsten electrodes 2, sample 3 and spark generator 4. Tungsten electrodes 2 are connected to the spark generator 4, and stand opposite to the sample 3 longitudinally. The nozzle 18 of the high-purity argon controller 1 aims at the spark center.

The above-mentioned light dispersion system includes the entrance slits 5, monochrometer 6 and exit slits 7. The entrance slits 5 and exit slits 7 lie in the two sides of the monochrometer 6 respectively. The width of the mentioned entrance slits 5 is 20-30 _m, and the width of the exit slits 7 is 50-80 _m. The number (n) of the exit slits is 3-55, and they could form 3-55 linear spectral channels for analyzing several elements of the sample at the same time.

The monochrometer 6 adopts concave grating and Paschen-Runge device. The basic optical parameters of the light dispersion system are: grating focus 750mm, and spectrum line range 120-800nm. The whole light dispersion system is in the state of constant temperature control.

Since the analyzer performs signal collection of single discharge, it could cancel the integrating circuits in the prior art. The above-mentioned high speed signal collection system is composed of PMT 8, high voltage board 9, amplification board 10 and high speed collection board (A/D) 11; corresponding to the number (n) of exit slits in light dispersion system, there are also n units of single discharge high speed collection system. The PMT 8, amplification board 10 and high-speed collection board 11 of each unit of single discharge collection system are connected in series through wire, and parallel connection is adopted between the each units. Furthermore, the high voltage board 9 is connected to the PMT 8 of each unit through wire 19.
The above-mentioned spark spectrum single discharge digital resolution system is composed of controlling machine 12, computer 13 and printer 14, and the three are connected with wire.
The above-mentioned sample movement / positioning system performs continuous excitement and synchronous scanning on the sample, and is a programmable automatic mechanical device. It is composed of framework 21, crotchet 22, connecting tube 23, lifting platform 25, X-axes guide track 29, Y-axes guide track 27, holding bar 32, and stepping motor 28 and 31. The lifting platform 25 is fixed on the X-axes guide track 29; the lifting platform 25 is connected with the crotchet 22 through connecting tube 23; the framework 21 is fixed on the crotchet 22; the holding bar 32 fastens the sample 3 through the pressure head 33; the fastening nut 24 is also used to fasten the sample 3; the stepping motor 31 is connected with X- axis guide track 29 through the screw rod 30; the stepping motor 28 is connected to the Y- axis guide track 27 through the screw rod 26. The two form X-Y rectangular coordinate scanning guide track.
In the signal analysis system, the controlling machine 12 issues commands through wire 17 to control the stepping motor 28 and 31 to drive the framework 21 to conduct scanning in the selected area. The movement scope and track may be adjusted according to analysis tasks. It can keep real time record of the accurate position of the discharge electrode of the spark generator. The movement speed of the sample reaches up to 0.1-1mm/sec, and it can conduct continuous excitement and synchronous scanning without re-melted of the sample to obtain the performance parameters of the sample in its original state.

### Details of embodiment mode

Apply the original position analyzer for metal of present invention to analyzing the chemical composition of metallic materials means that measuring the contents of the compositions by measuring the intensities of the characteristic spectral lines of various elements, and deciding the element distribution combine with the position signal. Below is an example of present invention. The details of process is as follows:
1. Setup the origin point of X-Y axes
   The continuous excitement synchronous scanning positioning system 15 holds sample 3 and moves to setup a relative zero point.
2. Sample parameters setting
   The computer 13 set the scanning scope of the sample.
3. Exciting sample and collecting signal
   Under the control of the program, the emission source system conducts spark discharge on the surface of the sample. After the light dispersion system disperse the continuous spectrum, the high-speed collection system of single discharge collects and stores the signals.
4. Data processing
   Conduct statistic analysis of the relative intensity of each single discharge energy received by computer 13 through controlling machine 12, and calculate the chemical composition of various elements and impurity contents. And according to the spark position data received by controlling machine 12 from continuous excitement synchronous scanning positioning system, you can calculate the segregation degree and porosity of the compositions on the surface of the material, and draft the element distribution and inclusion distribution diagram, which can be displayed in either 2D or 3D form, and printed out through printer.

Compared with the prior art, the present invention has the following advantages:
(1) Quantitative analytical results of all element contents, element composition distribution, segregation, porosity and inclusion in material can be obtained by one time of scanning analysis simultaneously. The testing information is complete and highly contrastable.
(2) Chemical composition of sample is calculated by use of element average content over all points in scanned area, so that the error caused by the difference of sampling point due to element segregation is avoided.
(3) Composition contents of each element at random point or line of the material can be displayed by 2D diagram and the most segregative position is marked. The quantitative result is accurate. The practicability of the proposed method is good.
(4) Porosity state at random point or line of material can be displayed by 2D diagram and the most porose position is marked. The quantitative result is accurate. The practicability of the proposed method is good.
(5) The distribution of element and inclusion in material can be displayed by three-dimensional diagram, which shows an intuitionistic image.
(6) The proposed method only needs a short analytical periods and suitable for monitoring and control on the production site.

## Claims

1. An original position analyzer for metal, **characterized in that** it include the following systems:
Emission source system, which performs spark discharge on the sample, and provides sample evaporation and atomization energy;
Light dispersion system, which transfers the received spark spectrum to form a linear spectrum;
High-speed signal collection system, which performs the high-speed collection of the single discharge;
Signal analysis system, which performs digital resolution for the spark spectrum of single discharge; and
Sample moving / positioning system, which makes the sample to perform continuous, two- dimensional movement relative to the emission source.

2. The original position analyzer for metal of claim 1, **characterized in that** said emission source system is composed of high-purity argon controller (1), tungsten electrode (2), sample (3) and spark generator (4). The tungsten electrode is connected to the spark generator (4), and stand opposite to the sample (3) longitudinally. The nozzle (18) of the high-purity argon controller (1) aims at the spark center.

3. The original position analyzer for metal of claim 1, **characterized in that** said light dispersion system includes the entrance slit (5), monochrometer (6) and exit slits (7). The entrance slits (5) and exit slits (7) lie in the two sides of the monochrometer (6) respectively. The number of exit slits (7) is n.

4. The original position analyzer for metal of claim 3, **characterized in that** the width of said entrance slit (5) is 20-30 _m, and the width of the exit slits (7) is 50-80 _m. The monochrometer (6) adopts concave grating and Paschen-Runge device. The number (n) of the exit slits is 3-55.

5. The original position analyzer for metal of claim 1, **characterized in that** said signal collection system is composed of n units of circuits that contain the following components:
(a) Photomultiplier tube (8): which transforms the optical signal of the linear spectrum output from the exit slits into electrical current signal;
(b) Amplification board (10): which amplifies the current signal output from the said photomultiplier tube (8);
(c) High speed collection board (11): which transforms the analog signal output from the said amplification board into digital signal, and then the said n units of circuits, after parallel connection, are connected to high voltage board (9); and
(d) High voltage board (9): which provides the photomultiplier tube (8) with 600-1000V negative high voltage, so that the cathode of photomultiplier tube (8) produces weak photoelectron current, which is amplified into strong current output from the anode.

6. The original position analyzer for metal of claim 5, **characterized in that** said signal analysis system includes:
Controlling machine (12), which receives signal output from the high speed collection board (11), and controls the movement of the sample movement / positioning system 15;
Computer (13), which analyzes the sample signal output from the controlling machine, and obtains the chemical composition, segregation, content and distribution of inclusion and porosity in accordance with the predetermine mathematical models; and
Printer (14), which outputs the said analysis results.

7. The original position analyzer for metal of claim 1, **characterized in that** the spectrum excited by said emission source system is input into the entrance slit (5) of the light dispersion system through the reflector (16).

8. The original position analyzer for metal of claim 1, **characterized in that** said sample moving/positioning system is composed of framework (21), crotchet (22), connecting tube (23), lifting platform (25), X-axis guide track (29), Y- axis guide track (27), holding bar (32), and stepping motor (29, 31). The lifting platform (25) is fixed on the X- axis guide track (29); the lifting platform (25) is connected with the crotchet (22) through connecting tube (23); the framework (21) is fixed on the crotchet (22); the holding bar (32) fastens the sample (3) through the pressure head (33); the fastening nut (24) is also used to fasten the sample (3); the stepping motor (31) is connected with X-axis guide track (29) through the screw rod (30); the stepping motor (28) is connected to the Y-axis guide track (27) through the screw rod (26). The two form X-Y rectangular coordinate scanning guide track.

9. The original position analyzer for metal of claim 1, **characterized in that** said emission source system is connected to the framework (21) of the continuous excitement synchronously scanning positioning system through the sample (3).

10. The original position analyzer for metal of claim 1, **characterized in that** the whole light dispersion system is in the state of constant temperature control.

11. The original position analyzer for metal of claim 1, **characterized in that** the basic optical parameters of the light dispersion system are: grating focus 750mm, and spectrum line range 120-800 nm.
